# NEW EUROPEAN PATENT SPECIFICATION

(11) **EP 3 514 922 B2**
(45) Date of publication and mention of the opposition decision: **14.12.2022**
(45) Mention of the grant of the patent: 26.02.2020
(21) Application number: 18152223.6
(22) Date of filing: 18.01.2018
(51) Int. Cl.: H02K 3/28, H02K 1/14, H02K 21/22, H02K 7/18

(54) **FRACTIONAL SLOT MULTI WINDING SET ELECTRICAL MACHINE**
ELEKTRISCHE MASCHINE MIT MEHREREN BRUCHLOCHWICKLUNGEN
MACHINE ÉLECTRIQUE MUNIE D'ENROULEMENTS MULTIPLES A NOMBRE FRACTIONNAIRE D'ENCOCHES PAR PÔLE ET PHASE

(43) Date of publication of application: 24.07.2019
(73) Proprietor: Siemens Gamesa Renewable Energy A/S, 7330 Brande (DK)
(72) Inventor: Azar, Ziad, Sheffield, S10 4ED (GB); Duke, Alexander, Sheffield, S6 5AG (GB); Thomas, Arwyn, Cheshire, SK8 6HW (GB); Wu, Zhan-Yuan, Sheffield, S10 4BB (GB)
(74) Representative: SGRE-Association

(56) References cited:
- EP-A1- 3 051 670
- EP-A2- 1 416 604
- WO-A1-02/15367
- WO-A1-03/073583
- WO-A1-2015/144463
- WO-A2-2011/006809
- WO-A2-2013/124239
- CN-A- 102 005 867
- CN-A- 105 680 585
- DE-A1-102015 205 348
- M. VAN DER GEEST ET AL: "Design optimisation of high performance fractional-slot distributed winding PM Synchronous machines for In-wheel application in Electric Vehicles", 8TH IET INTERNATIONAL CONFERENCE ON POWER ELECTRONICS, MACHINES AND DRIVES (PEMD 2016), 1 January 2016 (2016-01-01), pages 7 .-7 ., XP055511844, DOI: 10.1049/cp.2016.0131 ISBN: 978-1-78561-188-9
- "WINDKRAFTANLAGEN - GRUNDLAGEN, TECHNIK, EINSATZ, WIRTSCHAFTLICHKEIT", 2008, ISBN: 978-3-540-72150-5, article ERICH HAU: "chapter 9"
- "Skalieren von getriebelosen Windturbinen", 3. VDI- FACHKONFERENZ, 15 November 2012 (2012-11-15), Getriebelose Windenergieanlagen, Bremerhaven
- MANFRED STIEBLER, WIND ENERGY SYSTEMS FOR ELECTRIC POWER GENERATION, 2008, ISBN: 978-3-540-68762-7
- WIEDEMANN ET AL., KONSTRUKTION ELEKTRISCHER MASCHINEN, 1967, ISBN: 978-3-662-12181-8
- FRANK BRASAS: "Elektromagnetische Auslegung und Untersuchung von segmentierten Direct Drive Windkraftgeneratoren", FEMAG-ANWENDERTREFFEN 2011, 18 November 2011 (2011-11-18)
- Elektrische Maschinen und Antriebe", Andreas Binder. Springer verlag 2012, ISBN 978-3-540-71849-9.

## Description

### Field of invention

The present invention relates to a fractional slot dual three-phase winding set electrical machine, relates to a wind turbine and further relates to a method for controlling a fractional slot dual three-phase winding set electrical machine or a wind turbine.

### Art Background

An electrical machine may comprise a stator comprising a stator yoke having plural teeth alternating with plural slots. Furthermore, the electrical machine may comprise a rotor on which plural permanent magnets are mounted. The rotor may be rotatably supported to allow rotation of the rotor relative to the stator, while a gap is present between ends of the teeth of the stator and the poles of the rotor. In the slots of the stator, one or more winding sets may be arranged, in particular in multiple turns.

A fractional slot topology refers to a configuration, wherein the ratio of the number of slots divided by the number of poles is not an integer but a rational number. It has been observed that fractional slot topologies may be inherently prone to parasitic air gap sub-harmonic frequencies which may cause issues such as undesirable air gap forces and losses within the rotor house. Although the fractional slot concentrated winding (FSCW) generator may show a beneficial electromagnetic performance, the concentrated winding may also lead to a decrease in cooling surface area when compared to integer slot distributed winding topology electrical machines due to the reduction in end winding surface area. Similarly, the magnets of a permanent magnet FSCW may be more susceptible to demagnetization during fault conditions (such as short-circuits) than an equivalent distributed winding machine.

Thus, there may be a need for a fractional slot dual three-phase winding set electrical machine where parasitic air gap sub-harmonic frequencies are reduced, where effective cooling is achieved and demagnetization during fault conditions is reduced. The document EP 3 051 670 A1 discloses a winding design for a stator of an electric machine.

### Summary of the Invention

This need may be met by the subject matter according to the independent claims. Advantageous em-bodiments of the present invention are described by the dependent claims.

The electrical machine is composed of at least two sections which form a ring, i.e. a whole circumference in the circumferential direction. Alternatively, the electrical machine may be composed of at least two or at least three or even more sections which when assembled form a ring, i.e. a whole circumference in the circumferential direction. The stator portion and the rotor portion in each section may be separate from each other (not being connected to each other) to allow the assembled machine to rotate the rotor relative to the stator. All sections may be configured in a same manner or at least in a similar manner. The electrical machine may be configured as a generator for generating electrical energy or a motor for producing mechanical rotation. The electrical machine may comprise in particular a relatively high number of sections which may contribute for decreasing parasitic air gap sub-harmonic frequencies and/or which may contribute to reduce the demagnetization of the permanent magnets during fault conditions and may also contribute to improving the cooling.

According to an embodiment of the present invention, the number of slots is greater than or equal to 9 and the number of poles is greater than or equal to 10. Thereby, technical advantages regarding reduction of undesired frequencies and reduction of demagnetization of the permanent magnets may be achieved.

According to an embodiment of the present invention, the number of slots is 12 and the number of poles is 10 or the number of slots is 9 and the number of poles is 12 or the number of slots is 9 and the number of poles is 8 or the number of slots is 9 and the number of poles is 10 or the number of slots is 12 and the number of poles is 14. Other configurations are possible, e.g. multiples of these slot/pole numbers.

According to an embodiment of the present invention, a number of sections is between three to 11 or at least 12 or at least 13 or at least 14 or at least 15 or at least 16 sections or greater. The higher the number of sections, the better parasitic air gap sub-harmonic frequencies may be reduced, demagnetization may be reduced and cooling may be improved.

According to an embodiment of the present invention, the at least one second winding set comprises exactly one second winding set, wherein in particular one wire of one phase (e.g. A1+) of the first winding set and one wire of one phase (e.g. A2-) of the second winding sets are at least partly arranged in one slot of the plural slots side by side in the circumferential direction. Thereby, a dual electrical machine is provided having exactly two winding sets. In particular, the winding scheme may be a concentrated winding scheme. The dual winding set electrical machine may have the advantage to be of simple construction, while allowing segmentation of the electrical machine for transportation, simplifying the transportation.

In each of the slots of the stator, a wire of a phase of the first winding set may be arranged as well as a wire of a phase of the second winding set. The two wires commonly arranged in one slot may be insulated from each other appropriately. The turning direction of the one wire of the one phase of the first winding set may be opposite to the winding direction of the one wire of one phase of the second winding set. Other winding topologies may be possible.

According to an embodiment of the present invention, any wire of any winding set of any phase is wound in at least one turn around a tooth thereby at least partly occupying two slots adjacent to the tooth. In particular, any wire of any winding set of any phase may essentially occupy half of each of the two slots adjacent to the tooth around which this wire is wound. Thereby, a concentrated winding scheme may be supported.

According to the present invention, each winding set comprises a common connec-tion point at which one respective end of all wires of this winding set are connected with each other. The common connection point may also be referred to as a star con-nection point. Thereby, a star configuration is supported.

According to the present invention, other ends of all wires of one phase for one wind-ing set are connected with each other and are connect-able to a converter input of the respective phase for the respective winding set.

For each section the electrical machine comprises for each phase for each winding set at least one series connec-tion of coils, for example two, cor-responding to that phase and which are formed by wind-ing the wire in two opposing directions around two teeth which may be spaced apart in the circumferential direc-tion such that other teeth are in between. The series con-nection of the two coils for each phase for one section may be connected in parallel with a corresponding series connection of two coils of this phase for any of the other sections.

According to an embodiment of the present invention, a number of wires of each of the winding sets is equal to the number of sections times a number of phas-es, wherein the number of phases is three.

According to an embodiment of the present invention, the electrical machine further comprises a cooling system including cooling ducts at least within the teeth (in particular running along a radial direction), wherein a cooling capacity is scaled down for higher number of sections. By increasing the number of sections, the cooling surface area may be increased leading to a larger overall cooling surface area and therefore a more efficient transfer of losses from the machine to the cooling medium may be enabled. Thereby, scaling back the required cooling to reduce the costs is enabled.

According to an embodiment of the present invention it is provided a wind turbine comprising a rotor shaft with plural rotor blades and a machine according to one of the preceding embodiments which has the rotor mechanically coupled with the rotor shaft. Upon rotation of the rotor shaft driven by wind energy, the rotor of the machine rotates thereby inducing electrical currents in the multiple winding sets, thereby generating electrical energy.

It should be understood that features, individually or in any combination, disclosed, described or explained with respect to a fractional slot dual three-phase winding set electrical machine may also be applied, individually or in any combination, to a method for controlling a fractional slot dual three-phase winding set electrical machine or a wind turbine according to embodiments of the present invention and vice versa.

According to an embodiment of the present invention it is provided a method for controlling a fractional slot dual three-phase winding set electrical machine or a wind turbine according to one of the preceding claims, comprising controlling a first AC-DC converter connected to the first winding set and a second AC-DC converter connected to the second winding set such that first electric currents carried in the first winding set are (e.g. 30° for a dual machine) phase shifted relative to respective second electric currents carried in the second winding set.

By achieving a 30° phase shift between the electrical currents of the two winding sets, the inherent harmonics and ripples may be efficiently eliminated alleviating the parasitic air gap forces and rotor loss issues. In particular, when the electrical machine is configured having a 12 slot/10 pole topology, the generator performance due to the improved phase winding factor may be improved. The electrical machine may also have a topology of 12 slots and 14 poles in each section.

According to an embodiment of the present invention, a first current of an A phase of the first three-phase winding set is generated to be essentially 30° phase shifted relative to a second current of an A phase of the second three-phase winding set, wherein a first current of a B phase of the first three-phase winding set is generated to be essentially 30° phase shifted relative to a second current of a B phase of the second three-phase winding set, wherein a first current of a C phase of the first three-phase winding set is generated to be essentially 30° phase shifted relative to a second current of a C phase of the second three-phase winding set.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not limited to the described or illustrated embodiments.
Fig. 1 schematically illustrates in a sectional view a section of a fractional slot multi winding set electrical machine according to an embodiment of the present invention;
Fig. 2 schematically illustrates a circuit diagram of winding sets of a fractional slot multi winding set electrical machine according to an embodiment of the present invention;
Fig. 3 illustrates a wind turbine according to an embodiment of the present invention;
Fig. 4 illustrates a graph of a cooling surface area achieved in embodiments of the present invention;
Fig. 5 illustrates a graph of a fault current as achieved according to embodiments of the present invention;
Fig. 6 illustrates curves of torque ripple as achieved in embodiments of the present invention and
Fig. 7 illustrates graphs of a torque as observed for embodiments of the present invention.

### Detailed Description

The illustration in the drawings is in schematic form. It is noted that in different figures, similar or identical elements are provided with the same reference signs or with reference signs, which are different from the corresponding reference signs only within the first digit.

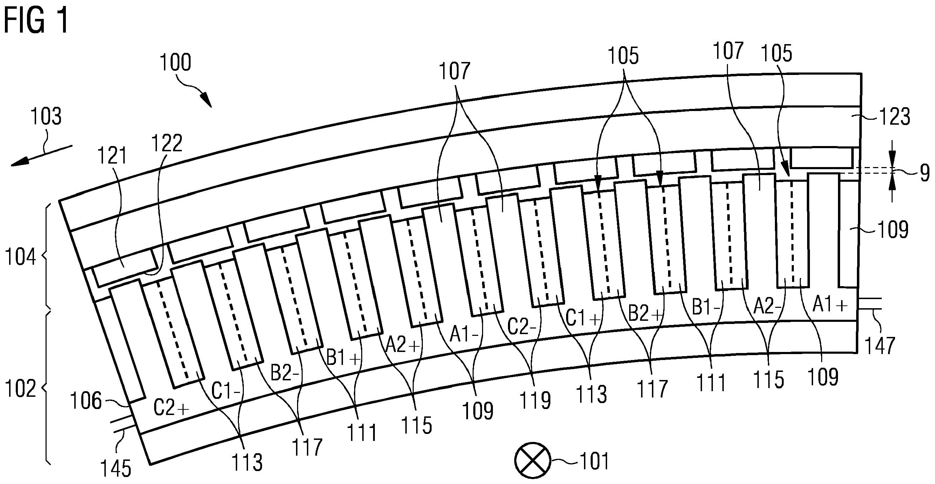

Fig. 1 schematically illustrates one section 100 of a fractional slot dual three-phase winding set electrical machine according to an embodiment of the present invention in a sectional view having an axial direction 101 being perpendicular to the drawing plane. At least two, for example three sections 100 form a whole circumference in the circumferential direction 103 of the fractional slot dual three-phase winding set electrical machine.

In particular, the section 100 is configured as a dual winding set section for the electrical machine, wherein each winding set has three phases. The phases are labelled A, B, C and the first winding set and the second winding set are labelled with numbers "1" and "2", respectively. The stator portion 102 comprises 12 slots 105 alternating with teeth 107 along the circumferential direction 103. Furthermore, the section 100 comprises a first winding set comprising wires for the phases A1, B1 and C1. In particular, the first winding set comprises a wire 109 for phase A1+ wherein the wire 109 is wound around one of the teeth 107 and occupies about a half of one of the slots 105. In particular, the wire 109 is wound around the tooth 107 which is labelled "A1+". The wire 109 is then led to another tooth 107 which is labelled "A1-" and is turned around this tooth in the opposite turning direction. Thus, the wire 109 forms two coils around two teeth (labelled as "A1+" and "A1-").

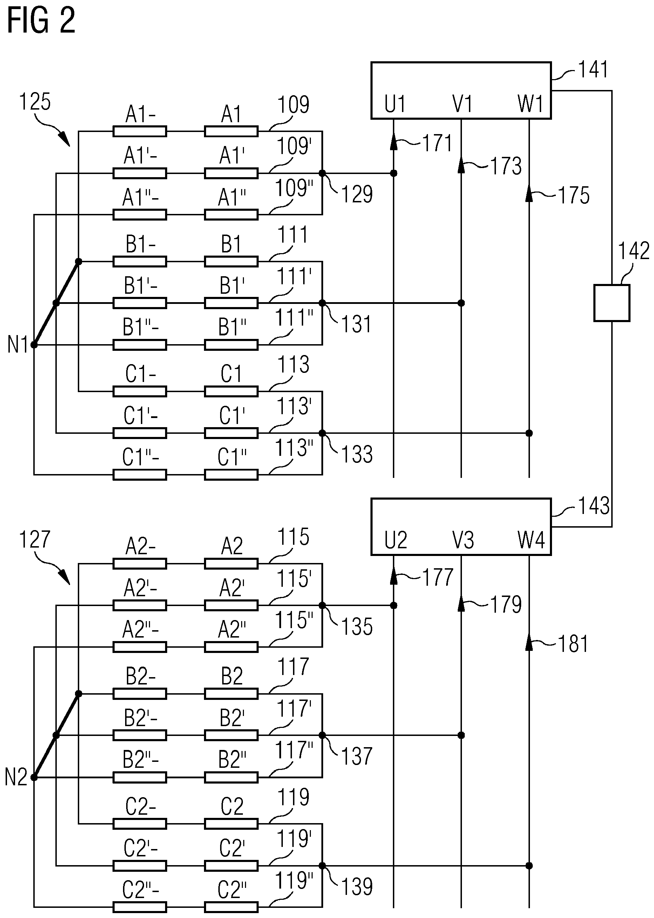

One end of the wire 109 is connected with respective ends of all other phases or wires of the first winding set, i.e. the wires 111 and the wire 113 at a common connection point N1, as illustrated in Fig. 2. The wire 111 is first wound around a tooth 107 labelled as "B1-", led to the tooth labelled "B1+" and turned around this tooth in the opposite direction. Finally, the wire 113 is turned in one or more winding turns around the tooth 107 labelled as "C1+", is then led to the tooth labelled "C1-" and is turned around this tooth in the opposite direction. The wires 109, 111 and 113 all belong to the first winding set (labelled in Fig. 2 as 125).

The second winding set (labelled in Fig. 2 as 127) comprises the wire 115 which is wound around the tooth labelled "A2-" which is then led to the tooth which is labelled "A2+" and turned in an opposite direction around this tooth. The second winding set further comprises the wires 117 (for phase B2) and the wire 119 (for phase C2).

The section 100 comprises the stator portion 102 and the (radially outer) rotor portion 104 having a gap g between ends of teeth and poles. The rotor portion comprises a number of poles, in the illustrated embodiment poles of ten magnets 121 which are mounted on a ring section 123 which may be supported to rotate relative to the stator portion 102. The stator 106 comprises the teeth 107.

The section 100 illustrated in Fig. 1 further comprises a not in detail illustrated cooling system including cooling fluid ducts within the stator yoke 106 which may comprise an inlet or an outlet 145, 147. Due to a relatively high number of sections 100 comprised in the electrical machine, the cooling surface may be relatively large or larger than conventionally observed. Thereby, the cooling may be improved.

Fig. 2 schematically illustrates the electrical connectivity of the first winding set 125 and the second winding set 127 for three sections such as section 100 illustrated in Fig. 1. As can be appreciated from Fig. 2, the first winding set 125 comprises for the phase U1 a parallel connection of three series connections of coils which are labelled A1-, A1, A1-', A1', A1-", A1" which are formed by winding the wires 109 (for the first section), 109' (for the second section) and 109" (for the third section), respectively, around teeth as is illustrated for example in Fig. 1. Further, the first winding set 125 comprises for the phase V1 a parallel connection of three series connections of coils which are labelled B1-, B1, B1-', B1', B1-", B1" which are formed by winding the wires 111, 111' and 111", respectively, around teeth as is illustrated for example in Fig. 1. Further, the first winding set 125 comprises for the phase W1 a parallel connection of three series connections of coils which are labelled C1-, C1, C1-', C1', C1-", C1" which are formed by winding the wires 113, 113' and 113", respectively, around teeth as is illustrated for example in Fig. 1.

Similarly, the second winding set 127 comprises for each phase U2, V2, W2 a parallel connection of a series connection of two coils which are formed by winding the wires 115, 117, 119 and the corresponding primed wires around respective teeth.

The connection scheme illustrated in Fig. 2 thus represents a connection scheme of a fractional slot dual three-phase winding set electrical machine having exactly three sections per segment, such as sections as illustrated in Fig. 1. In other embodiments, the fractional slot dual three-phase winding set electrical machine has a total of twelve sections or thirteen sections or fourteen sections or fifteen sections or sixteen sections or even a greater number of sections.

One end of all wires 109, 111, 113 (and the primed versions) are connected to a first common connection point N1, thereby forming a start configuration. The other ends for one phase are connected to each other to respective phase connection points 129 for phase U1, 131 for phase V1 and 133 for phase W1. Similarly, the other ends of the wires of the second winding set 127 are connected to second phase connection points 135, 137, 139 for the phases U2, V2 and W2, respectively.

The phase connection points 129, 131 and 133 of the first set 125 of windings are connected (as U1, V1 and W1) to respective input terminals of a first AC-DC converter 141. Similarly, the phase connection points 135, 137 and 139 may be connected (as U2, V2 and W2) to respective input terminals of a second AC-DC converter 143. The AC-DC converters 141, 143 are connected to a control system 142 that is adapted to carry out a method according to an embodiment of the present invention.

The wire 109 of the first winding set may be comprised in a first section, the wire 109' may be comprised in a second section and the wire 109" may be comprised in a third section of the fractional dual three-phase winding set electrical machine. Furthermore, the wire 111 may be comprised in the first section, the wire 111' may be comprised in the second section and the wire 111" may be comprised in the third section of the electrical machine. Analogously, the wire 113 may be comprised in a first section, the wire 113' may be comprised in a second section and the wire 113" may be comprised in a third section of the electrical machine.

The first winding set comprises thus nine wires which is equal to the number of sections (i.e. three sections) times the number of phases (i.e. three phases).

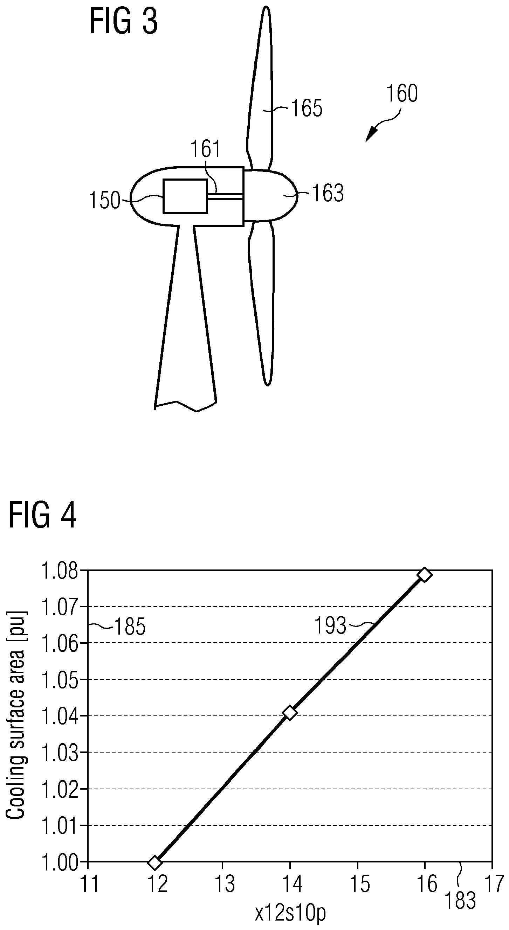

Fig. 3 schematically illustrates a wind turbine 160 according to an embodiment of the present invention. The wind turbine 160 comprises a rotor shaft 161 having a hub 163 at which plural rotor blades 165 are connected. The wind turbine 160 further comprises an electrical machine 150 which may comprise at least one section, for example three, 100 as illustrated in Fig. 1 which form a whole circumference in the circumferential direction.

The electrical machine 150 may for example be controlled according to a method for controlling a fractional slot dual three-phase winding set electrical machine according to an embodiment of the present invention. Thereby, the first AC-DC converter 141 is connected to the first winding set 125 and the second AC-DC converter 143 is connected to the second winding set, as illustrated in Fig. 2. The control is such that the first electric currents 171, 173, 175 carried in the first winding set 125 are essentially phase shifted, for example 30°, relative to the respective second electric currents 177, 179 and 181.

By using a dual-three-phase system with a phase shift, for example 30°, between the systems, the inherent harmonics and ripple may be eliminated alleviating the parasitic air gap forces and rotor loss issues. Also, by operating the 12 slots/10 pole topology in this manner may improve the generator performance due to the improved phase winding factor. Using other fractional slot topologies may result in requiring a higher number of multi-phase combinations resulting in added costs in converter system modularity. This technique is also applicable for 12 slots/14 pole rotor combinations.

By increasing the number of 12 slots/10 poles (12 s/10 p) FSCW sections, the fault current per coil may be reduced. This may be because the number of coils is greater thereby the current per coil may be reduced. Further, this may be due to the parallel arrangement of the 12 s/10 p sections (see Fig. 2), therefore the higher number of sections, the lower the fault current per coil may be. A lower fault current per coil may equate to a lower demagnetization risk of the permanent magnet poles directly opposite the coil which is in a circuit under fault conditions.

A further advantage of increasing the number of 12 s/10 p sections may be to increase the cooling surface area of the double layer winding and the air in the air ducts. This may lead to a larger overall cooling surface area and therefore a more efficient transfer of losses from the machine to the cooling medium. This could facilitate either loading the machine slightly higher to achieve a higher output power or scaling down the required cooling to reduce the cost. 12 x 12s/10 p sections may be considered which may be divided into six segments of 2 x 12 s/10 p sections. Increasing this to 14 x and 16 x 12 s/10 p sections has been evaluated which would then require seven or eight segments, respectively. A higher number of segments may slightly increase the manufacturing cost, but would also reduce cost and storage, transportation and lifting due to the smaller size and weight of each segment.

Finally, the higher number of poles would also lead to a slight reduction in the torque ripple.

According to an embodiment of the present invention, a simple fractional slot topology of 12 slots and 10 poles is utilized combined with the dual three-phase winding with phase shift to eliminate the parasitic effect of the air gap flux harmonics. In particular combined with the increase in the number of 12 s/10 p sections may improve the thermal operation of the generator by increasing the cooling surface area, reducing the demagnetization risk of the magnets as well as reducing the torque ripple.

Figs. 4 to 7 illustrate graphs regarding the performance and properties of electrical machines according to embodiments of the present invention. Thereby, the abscissas 183 denote the number of 12 slot/10 pole sections, such as section 100 illustrated in Fig. 1, which are comprised in the fractional slot electrical machine.

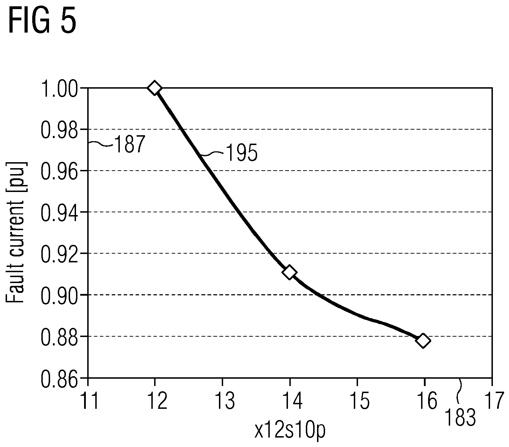

The ordinate 185 in Fig. 4 denotes the cooling surface area 185, the ordinate 187 in Fig. 5 denotes the fault current relative to a nominal current. The ordinate 189 in Fig. 6 denotes the torque ripple in units of the nominal torque ripple and the ordinate 191 in Fig. 7 denotes the torque in units of the nominal torque.

The curve 193 in Fig. 4 shows that the cooling surface area increases with increasing number of 12 slot/10 pole sections comprised in the electrical machine. In particular, Fig. 4 demonstrates how the total cooling area of the generator can be increased by increasing the number of 12 s/10 p groups. In this case, the increase in area is primarily due to the increase in the end-winding area as well as the increase of coil area in the cooling ducts.

The previously mentioned decrease in peak fault current can also be appreciated in Fig. 5 as a curve 195. The peak fault current is the leading factor in magnet irreversible demagnetization. As can be appreciated from Fig. 5, the peak fault current decreases according to the curve 195 with increasing number of 12 s/10 p sections comprised in the electrical machine.

Although embodiments of this application have been detailed regarding the 12 s/10 p combination, other fractional slot concentrated winding pole slot combinations may equally benefit from this invention, like 11 s/12 p, 9 s/10 p.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Fractional slot dual three-phase winding set electrical machine (150), comprising:
at least two sections (100) forming a whole circumference in a circumferential direction (103), each section having a stator portion (102) and a rotor portion (104),
the stator portion of each section comprising:
a number of slots (105) alternating with teeth (107) along the circumferential direction;
for each phase (A, B, C) a wire (109, 109', 109", 111, 111', 111", 1013, 113', 113") of a first winding set (125) comprising three phases (A, B, C);
for each phase (A, B, C) a wire (115, 115', 115", 117, 117', 117", 119, 119', 119") of a second winding set (127) comprising three phases (A, B, C),
the electrical machine further comprising:
a first AC-DC converter (141) connected to the first winding set (125),
a second AC-DC converter (143) connected to the second winding set (127),
wherein the first and second winding sets (125, 127) are arranged at least partly in the slots (105) according to a concentrated winding topology,
the rotor portion (104) of each section comprising:
a number of poles (122) of plural magnets (121) separated by a gap (g) from the teeth (107),
wherein the electrical machine is configured to control the first AC-DC converter (141) and the second AC-DC converter (143) such that first electric currents (161, 173, 175) carried in the first winding set are phase shifted relative to respective second electric currents (177, 179, 181) carried in the second winding set,
wherein for each section the electrical machine comprises for each phase for each winding set at least one series connection of coils corresponding to that phase and which are formed by winding the wire in two opposing directions around two teeth which are spaced apart in the circumferential direction such that other teeth are in between, wherein the series connection of the coils for each phase for one section is connected in parallel with a corresponding series connec-tion of coils of this phase for any of the other sections,
wherein each winding set (125, 127) comprises a common connection point (N1, N2) at which one respective end of all wires (109,111,113; 115, 117, 119) of this winding set are connected with each other,
wherein other ends of all wires of one phase for one winding set are connected with each other and are connectable to a converter (141, 143) input of the respective phase for the respective winding set.

2. Machine according to the preceding claim, wherein the number of slots (105) per pole (122) per phase is not an integer.

3. Machine according to the preceding claim, wherein the number of slots (105) is greater than or equal to 9 and the number of poles (122) is greater than or equal to 10.

4. Machine according to one of the preceding claims,
wherein the number of slots (105) is 12 and the number of poles (122) is 10 or
wherein the number of slots (105) is 9 and the number of poles (122) is 12 or
wherein the number of slots (105) is 9 and the number of poles (122) is 8 or
wherein the number of slots (105) is 9 and the number of poles (122) is 10 or
wherein the number of slots (105) is 12 and the number of poles (122) is 14.

5. Machine according to one of the preceding claims, wherein a number of sections (100) is between one to 11 or at least 12 or at least 13 or at least 14 or at least 15 or at least 16 sections or greater.

6. Machine according to one of the preceding claims, wherein any wire of any winding set of any phase is wound in at least one turn around a tooth thereby at least partly occupying two slots adjacent to the tooth.

7. Machine according to one of the preceding claims, wherein a number of wires of each of the winding sets is equal to the number of sections times a number of phases, wherein the number of phases is three or four of five or even greater.

8. Machine according to one of the preceding claims, further comprising:
a cooling system (145, 147) including cooling ducts within the teeth, wherein a cooling capacity is scaled down for higher number of sections.

9. Wind turbine (160), comprising:
a rotor shaft (161) with plural rotor blades (163);
a machine (150) according to one of the preceding claims having the rotor mechanically coupled with the rotor shaft.

10. Method for controlling a fractional slot dual three-phase winding set electrical machine (150) or a wind turbine (160) according to one of the preceding claims, comprising:
controlling the first AC-DC converter (141) connected to the first winding set (125) and the second AC-DC converter (143) connected to the second winding set (127) such that first electric currents (161, 173, 175) carried in the first winding set are phase shifted relative to respective second electric currents (177, 179, 181) carried in the second winding set.

11. Method according to the preceding claim,
wherein a first current (171) of an A phase of the first three-phase winding set (125) is generated to be phase shifted relative to a second current (177) of an A phase of the second three-phase winding set (127),
wherein a first current (173) of a B phase of the first three-phase winding set (125) is generated to be phase shifted relative to a second current (179) of a B phase of the second three-phase winding set (127),
wherein a first current (175) of a C phase of the first three-phase winding set (125) is generated to be phase shifted relative to a second current (181) of a C phase of the second three-phase winding set (127).

## Patentansprüche

1. Elektrische Maschine (150) mit mehreren Bruchlochwicklungssätzen, die Folgendes umfasst:
mindestens zwei Teilstücke (100), die in Umfangsrichtung (103) einen Gesamtumfang bilden, wobei jedes Teilstück einen Statorabschnitt (102) und einen Rotorabschnitt (104) aufweist,
wobei der Statorabschnitt jedes Teilstücks Folgendes umfasst:
mehrere Nuten (105) im Wechsel mit Zähnen (107) in Umfangsrichtung;
für jede Phase (A, B, C) einen Draht (109, 109', 109", 111, 111', 111", 1013, 113', 113") eines ersten Wicklungssatzes (125), der drei Phasen (A, B, C) beinhaltet,
für jede Phase (A, B, C) einen Draht (115, 115', 115", 117, 117', 117", 119, 119', 119") eines zweiten Wicklungssatzes (127), der drei Phasen (A, B, C) beinhaltet,
wobei die elektrische Maschine ferner Folgendes umfasst:
einen ersten Gleichrichter (141), der an den ersten Wicklungssatz (125) angeschlossen ist,
einen zweiten Gleichrichter (143), der an den zweiten Wicklungssatz (127) angeschlossen ist,
wobei der erste und der zweite Wicklungssatz (125, 127) einer konzentrierten Wicklungstopologie entsprechend zumindest teilweise in den Nuten (105) angeordnet sind,
wobei der Rotorabschnitt (104) jedes Teilstücks Folgendes umfasst:
eine Anzahl Pole (122) mehrerer Magneten (121), die durch einen Spalt (g) von den Zähnen (107) getrennt sind,
wobei die elektrische Maschine dazu ausgelegt ist, den ersten Gleichrichter (141) und den zweiten Gleichrichter (143) derart zu steuern, dass erste elektrische Ströme (161, 173, 175) in dem ersten Wicklungssatz in Bezug auf jeweilige zweite elektrische Ströme (177, 179, 181) in dem zweiten Wicklungssatz phasenverschoben sind,
wobei für jedes Teilstück die elektrische Maschine für jede Phase für jeden Wicklungssatz zumindest eine Reihenverbindung von Spulen entsprechend dieser Phase umfasst, und die gebildet werden durch Wickeln des Drahtes in zwei entgegengesetzte Richtungen rund um zwei Zähne, die in Umfangsrichtung beabstandet sind, sodass andere Zähne dazwischen liegen, wobei die Reihenverbindung der Spulen für jede Phase für ein Teilstück parallel mit einer entsprechenden Reihenverbindung von Spulen dieser Phase für ein beliebiges der anderen Teilstücke verbunden ist,
wobei jeder Wicklungssatz (125, 127) einen gemeinsamen Verbindungspunkt (N1, N2) umfasst, an dem alle Drähte (109, 111, 113; 115, 117, 119) dieses Wicklungssatzes an jeweils einem Ende miteinander verbunden sind,
wobei andere Enden aller Drähte einer Phase für einen Wicklungssatz miteinander verbunden sind und sich an einen Eingang des Stromrichters (141, 143) der jeweiligen Phase für den jeweiligen Wicklungssatz anschließen lassen,
wobei die Phasenverbindungspunkte (129, 131, 133) des ersten Wicklungssatzes (125) mit entsprechenden Eingangsanschlüssen des ersten Stromrichters (141) verbunden sind,
wobei die Phasenverbindungspunkte (135, 137, 139) des zweiten Wicklungssatzes (127) mit entsprechenden Eingangsanschlüssen des zweiten Stromrichters (143) verbunden sind,
wobei die Anzahl Nuten (105) 12 und die Anzahl Pole (122) 10 beträgt,
wobei die Teilstücke nicht segmentiert sind.

2. Maschinen nach dem vorhergehenden Anspruch, wobei die Anzahl Nuten (105) pro Pol (122) pro Phase keine ganze Zahl ist.

3. Maschine nach dem vorhergehenden Anspruch, wobei die Anzahl Nuten (105) größer als oder gleich 9 und die Anzahl Pole (122) größer als oder gleich 10 beträgt.

4. Maschine nach einem der vorhergehenden Ansprüche,
wobei die Anzahl Nuten (105) 12 und die Anzahl Pole (122) 10 beträgt, oder
wobei die Anzahl Nuten (105) 9 und die Anzahl Pole (122) 12 beträgt, oder
wobei die Anzahl Nuten (105) 9 und die Anzahl Pole (122) 8 beträgt, oder
wobei die Anzahl Nuten (105) 9 und die Anzahl Pole (122) 10 beträgt, oder
wobei die Anzahl Nuten (105) 12 und die Anzahl Pole (122) 14 beträgt.

5. Maschine nach einem der vorhergehenden Ansprüche, wobei eine Anzahl Teilstücke (100) zwischen eins und 11 oder mindestens 12 oder mindestens 13 oder mindestens 14 oder mindestens 15 oder mindestens 16 Teilstücken oder mehr liegt.

6. Maschine nach einem der vorhergehenden Ansprüche, wobei ein Draht eines beliebigen Wicklungssatzes einer beliebigen Phase mit mindestens einer Windung um einen Zahn gewickelt ist und dadurch zumindest teilweise zwei neben dem Zahn liegende Nuten belegt.

7. Maschine nach einem der vorhergehenden Ansprüche, wobei eine Anzahl Drähte jedes der Wicklungssätze gleich der Anzahl von Teilstücken mal einer Anzahl Phasen ist, wobei die Anzahl Phasen drei oder vier oder fünf oder noch mehr beträgt.

8. Maschine nach einem der vorhergehenden Ansprüche, die ferner Folgendes umfasst:
ein Kühlsystem (145, 147) mit Kühlkanälen in den Zähnen, wobei eine Kühlleistung für eine größere Anzahl Teilstücke reduziert ist.

9. Windenergieanlage (160), die Folgendes umfasst:
eine Rotorwelle (161) mit mehreren Rotorblättern (163);
eine Maschine (150) nach einem der vorhergehenden Ansprüche, bei der der Rotor mechanisch mit der Rotorwelle gekoppelt ist.

10. Verfahren zum Steuern einer elektrischen Maschine (150) mit zwei Dreiphasen-Bruchlochwicklungssätzen oder einer Windenergieanlage (160) nach einem der vorhergehenden Ansprüche, das Folgendes umfasst:
derartiges Steuern eines ersten Gleichrichters (141), der an den ersten Wicklungssatz (125) angeschlossen ist, und eines zweiten Gleichrichters (143), der an den zweiten Wicklungssatz (127) angeschlossen ist, dass erste elektrische Ströme (161, 173, 175) in dem ersten Wicklungssatz in Bezug auf jeweilige zweite elektrische Ströme (177, 179, 181) in dem zweiten Wicklungssatz phasenverschoben sind.

11. Verfahren nach dem vorhergehenden Anspruch,
wobei ein erster Strom (171) einer Phase A des ersten Dreiphasen-Wicklungssatzes (125) so erzeugt wird, dass er in Bezug auf einen zweiten Strom (177) einer Phase A des zweiten Dreiphasen-Wicklungssatzes (127) phasenverschoben ist,
wobei ein erster Strom (173) einer Phase B des ersten Dreiphasen-Wicklungssatzes (125) so erzeugt wird, dass er in Bezug auf einen zweiten Strom (179) einer Phase B des zweiten Dreiphasen-Wicklungssatzes (127) phasenverschoben ist,
wobei ein erster Strom (175) einer Phase C des ersten Dreiphasen-Wicklungssatzes (125) so erzeugt wird, dass er in Bezug auf einen zweiten Strom (181) einer Phase C des zweiten Dreiphasen-Wicklungssatzes (127) phasenverschoben ist.

## Revendications

1. Machine électrique munie d'ensembles d'enroulements multiples à nombre fractionnaire d'encoches (150), comprenant :
au moins deux sections (100) formant une circonférence totale dans une direction circonférentielle (103), chaque section ayant une partie de stator (102) et une partie de rotor (104),
la partie de stator de chaque section comprenant :
un certain nombre d'encoches (105) alternées avec des dents (107) le long de la direction circonférentielle ;
pour chaque phase (A, B, C), un fil (109, 109', 109", 111, 111', 111", 113, 113', 113") d'un premier ensemble d'enroulements (125) ;
pour chaque phase (A, B, C), un fil (115, 115', 115", 117, 117', 117", 119, 119', 119") d'un second ensemble d'enroulements (127),
la machine électrique comprenant en outre :
un premier convertisseur alternatif-continu CA-CC (141) connecté au premier ensemble d'enroulements (125),
un deuxième convertisseur alternatif-continu CA-CC (143) connecté au deuxième ensemble d'enroulements (127),
dans laquelle les premier et second ensembles d'enroulements (125, 127) sont agencés au moins partiellement dans les encoches (105) conformément à une topologie d'enroulement concentré,
la partie de rotor (104) de chaque section comprenant :
un certain nombre de pôles (122) de plusieurs aimants (121) séparés des dents (107) par un espace (g),
dans laquelle la machine électrique est configurée pour contrôler le premier convertisseur alternatif-continu CA-CC (141) et le deuxième convertisseur alternatif-continu CA-CC (143) de sorte que des premiers courants électriques (161, 173, 175) transportés dans le premier ensemble d'enroulements sont déphasés par rapport à des seconds courants électriques respectifs (177, 179, 181) transportés dans le second ensemble d'enroulements,
dans laquelle pour chaque section, la machine électrique comprend pour chaque phase pour chaque ensemble d'enroulements au moins une connexion en série de bobines qui correspondent à cette phase et qui sont formées en enroulant le fil en deux directions opposées autour des deux dents qui sont espacés dans la direction circonférentielle, de sorte que d'autres dents se trouvent entre elles, dans laquelle la connexion en série de bobines pour chaque phase d'une section, est connectée en parallèle avec une connexion en série de bobines correspondantes de cette phase pour l'une quelconque des autres sections,
dans laquelle chaque ensemble d'enroulement (125 , 127) comprend un point de connexion commun (N1, N2) auquel une extrémité respective de tous les fils (109, 111, 113 ; 115, 117, 119) de cet ensemble d'enroulements sont connectées les unes aux autres,
dans laquelle les autres extrémités de tous les fils d'une phase pour un ensemble d'enroulements sont connectés entre eux sont connectables à une entrée de convertisseur alternatif-continu CA-CC (141, 143) de la phase respective pour l'ensemble d'enroulement respectif.

2. Machine selon la revendication précédente, dans laquelle le nombre d'encoches (105) par pôle (122) par phase n'est pas un nombre entier.

3. Machine selon la revendication précédente, dans laquelle le nombre d'encoches (105) est supérieur ou égal à 9 et le nombre de pôles (122) est supérieur ou égal à 10.

4. Machine selon l'une des revendications précédentes,
dans laquelle le nombre d'encoches (105) est de 12 et le nombre de pôles (122) est de 10 ou
dans laquelle le nombre d'encoches (105) est de 9 et le nombre de pôles (122) est de 12 ou
dans laquelle le nombre d'encoches (105) est de 9 et le nombre de pôles (122) est de 8 ou
dans laquelle le nombre d'encoches (105) est de 9 et le nombre de pôles (122) est de 10 ou
dans laquelle le nombre d'encoches (105) est de 12 et le nombre de pôles (122) est de 14.

5. Machine selon l'une des revendications précédentes, dans laquelle un nombre de sections (100) est entre 2 et 11 ou d'au moins 12 ou d'au moins 13 ou d'au moins 14 ou d'au moins 15 ou d'au moins 16 sections ou supérieur.

6. Machine selon l'une des revendications précédentes, dans laquelle un quelconque fil d'un quelconque ensemble d'enroulements d'une quelconque phase est enroulé sur au moins un tour autour d'une dent, occupant ainsi au moins partiellement deux encoches adjacentes à la dent.

7. Machine selon l'une des revendications précédentes, dans laquelle un nombre de fils de chacun des ensembles d'enroulements est égal au nombre de sections multiplié par un nombre de phases, dans laquelle le nombre de phases est de trois ou quatre ou cinq ou même supérieur.

8. Machine selon l'une des revendications précédentes, comprenant en outre :
un système de refroidissement (145, 147) incluant des conduits de refroidissement à l'intérieur des dents, dans laquelle une capacité de refroidissement est réduite pour un nombre supérieur de sections.

9. Éolienne (160), comprenant :
un arbre de rotor (161) ayant plusieurs pales de rotor (163) ;
une machine (150) selon l'une des revendications précédentes ayant le rotor mécaniquement couplé avec l'arbre de rotor.

10. Procédé de commande d'une machine électrique munie d'ensembles d'enroulements triphasés doubles à nombre fractionnaire d'encoches (150) ou d'une éolienne (160) selon l'une des revendications précédentes, comprenant :
la commande du premier convertisseur alternatif-continu, CA-CC (141) connecté au premier ensemble d'enroulements (125) et du second convertisseur CA-CC (143) connecté au second ensemble d'enroulements (127) de sorte que des premiers courants électriques (161, 173, 175) transportés dans le premier ensemble d'enroulements sont déphasés par rapport à des seconds courants électriques respectifs (177, 179, 181) transportés dans le second ensemble d'enroulements.

11. Procédé selon la revendication précédente,
dans lequel un premier courant (171) d'une phase A du premier ensemble d'enroulements triphasé (125) est généré pour être déphasé par rapport à un second courant (177) d'une phase A du second ensemble d'enroulements triphasé (127),
dans lequel un premier courant (173) d'une phase B du premier ensemble d'enroulements triphasé (125) est généré pour être déphasé par rapport à un second courant (179) d'une phase B du second ensemble d'enroulements triphasé (127),
dans lequel un premier courant (175) d'une phase C du premier ensemble d'enroulements triphasé (125) est généré pour être déphasé par rapport à un second courant (181) d'une phase C du second ensemble d'enroulements triphasé (127).
